# EUROPÄISCHE PATENTSCHRIFT

(11) **EP 2 654 530 B1**
(45) Veröffentlichungstag und Bekanntmachung des Hinweises auf die Patenterteilung: **09.12.2015**
(21) Anmeldenummer: 11794510.5
(22) Anmeldetag: 15.12.2011
(51) Int. Cl.: A47J 31/42, A47J 31/36

(54) **VERFAHREN ZUM DOSIEREN VON KAFFEEMEHL**
METHOD FOR METERING COFFEE GROUNDS
PROCÉDÉ DE DOSAGE DE CAFÉ MOULU

(30) Priorität: 22.12.2010 DE 102010063947
(43) Veröffentlichungstag der Anmeldung: 30.10.2013
(73) Patentinhaber: BSH Hausgeräte GmbH, 81739 München (DE)
(72) Erfinder: BECK, Rudolf, 84518 Garching a. d. Alz (DE); HOECK, Florian, 83334 Inzell (DE); STROBL, Robert, 83246 Unterwössen (DE)
(86) Internationale Anmeldenummer: PCT/EP2011/072871
(87) Internationale Veröffentlichungsnummer: WO 2012/084676

(56) Entgegenhaltungen:
- WO-A1-2008/105017
- WO-A1-2009/010190
- WO-A1-2011/045055
- DE-C1- 3 615 158

## Beschreibung

Die Erfindung betrifft ein Verfahren zum Betreiben eines Kaffeevollautomaten zur Sicherstellung einer gleich bleibenden Brühqualität während seiner Lebensdauer. Dazu wird regelmäßig ein Mahlgrad bestimmt, indem nach der Brühung physikalische Kennwerte bezüglich des Kaffeepulvers für eine Tassenportion erfasst werden. Eine Kaffeemaschine zur Durchführung dieses Verfahrens umfasst eine Brühkammer, einen T-Kolben zum Verdichten von Kaffeepulver in der Brühkammer, eine Speichereinheit zum Hinterlegen von Werten und eine Steuereinheit zum Verarbeiten von gespeicherten und ermittelten Werten.

Die WO 2008/105017 A1 beschreibt ein Verfahren für eine automatische Anpassung der Kaffeepulvermenge und eine Kaffeemaschine zur Durchführung dieses Verfahrens. Dazu wird eine bestimmte vordefinierte Menge an Kaffeepulver in eine Brühkammer gegeben, die Brühkammer durch Antrieb eines elektrischen Aktuators geschlossen und das Kaffeepulver dabei verdichtet. Während des Verdichtungsvorgangs des Kaffeepulvers in der Brühkammer wird zumindest ein Parameter des elektrischen Aktuators erfasst und die Kaffeepulvermenge in Abhängigkeit des erfassten Parameters in Relation zu einem werkseitig eingestellten Grenzwert festgestellt. Über- oder unterschreitet er den Grenzwert, wird die Kaffeepulvermenge im anschließenden Brühvorgang angepasst. Dieses Verfahren dient vor allem dazu, ein Über- oder Unterfüllen der Brühkammer zu vermeiden. Bei einer Überfüllung könnte die Mechanik der Maschine Schaden nehmen, bei einer Unterfüllung kann es zu einer Verschlammung der Brüheinheit kommen, weil der Trester nicht ausreichend verpresst werden kann. Aufgrund von Alterungsprozessen kann es jedoch zu einer schleichenden Abweichung der ermittelten Kaffeepulvermengen kommen, die in die Brühkammer abgegeben werden.

Die WO 2009/010190 A1 offenbart ein Verfahren zum Betreiben eines Kaffeevollautomaten zur Sicherstellung einer gleich bleibenden Brühgualität während seiner Lebensdauer durch Ermitteln eines Mahlgrads unter Erfassung von physikalischen Kennwerten bezüglich des Kaffeepulvers, indem ein Kennwert einer Kaffeepulvermenge erfasst und daraus ein Parameter zur Bestimmung des Mahlgrads eines nachfolgenden Brühvorgangs ermittelt wird.

Die DE 36 151 58 U1 gibt ein Verfahren an, bei dem unter anderem ein Mahlgrad indirekt aus einer Durchlaufzeit des Brühwassers ermittelt wird. Dieses Verfahren ist jedoch relativ ungenau.

Es ist Aufgabe der Erfindung, einen Kaffeevollautomaten anzugeben, der während seiner gesamten Lebensdauer Kaffeegetränke von gleich bleibender Qualität zubereitet. Diese Aufgabe wird bei dem eingangs genannten Verfahren dadurch gelöst, dass im Betrieb der Kaffeemaschine selbsttätig der Mahlgrad des zubereiteten Kaffeepulvers ermittelt wird, indem eine physikalische Kenngröße einer Kaffeepulvermenge vor und nach einer Infusion von Zubereitungswasser erfasst und daraus ein Parameter zur Bestimmung des Mahlgrads eines nachfolgenden Brühvorgangs ermittelt wird. Erfindungsgemäß wird also ein Kennwert des frisch gemahlenen, aber noch trockenen Kaffeepulvers ermittelt. Abweichend vom Stand der Technik wird jedoch schon vor einem Brühvorgang ein Messwert erfasst, der den gemahlenen Kaffee betrifft und der Ermittlung des Mahlgrads dient. Die Erfindung wendet sich damit davon ab, zunächst von einer werkseitigen Einstellung des Mahlgrads und anschließend über die Lebensdauer von einer experimentell ermittelten Alterung bzw. einem Verschleiß insbesondere des Mahlwerks auszugehen oder einen Mahlgrad mittelbar durch eine Ableitung aus Kenngrößen während oder nach der Brühung zu ermitteln. Sie verfolgt vielmehr das Prinzip, den tatsächlichen Mahlgrad anhand von Daten des frischen und nicht gebrühten Kaffeepulvers einer Tassenportion unmittelbar nach dem Mahlen zu erfassen. Ihr gelingt damit eine wesentlich genauere Bestimmung des tatsächlichen Mahlgrads. Dadurch lässt sich eine wesentlich genauere Steuerung des Kaffeevollautomaten im Sinne einer gleich bleibenden Qualität der bezogenen Getränke erzielen.

Ein aussagekräftiger physikalischer Kennwert des Kaffeepulvers zur Bestimmung des Mahlgrads stellt beispielsweise das Gewicht der Pulvermenge dar. Sie lässt sich vor und nach einem Benetzen mit Wasser erfassen und eine deutliche Abweichung feststellen, die mit dem Mahlgrad korreliert. Nach einer vorteilhaften Ausgestaltung der Erfindung wird jedoch das Volumen der Kaffeepulvermenge in der Brühkammer erfasst. Dazu muss es zwar verpresst werden, um eine einfache Erfassung zu ermöglichen. Denn das Verdichten in der Brühkammer bringt das Kaffeepulver in eine einfacher messbare Form als ihn sein loser unverdichteter Zustand böte. Dafür sind jedoch keine zusätzlichen Einrichtungen erforderlich, weil eine Verpressung ohnehin während des Brühvorgangs stattfindet. Die Volumenbestimmung kann anhand der Bestimmung der Kolbenposition in der ihren Abmessungen und damit ihrem Volumen nach bekannten Brühkammer erfolgen. Alle dafür erforderlichen Vorrichtungen sind in einem höherwertigen Kaffeevollautomaten vorhanden bzw. lassen sich ohne großen Aufwand dazu ausbauen oder ergänzen. Daher stellt die Volumenerfassung einen besonders kostengünstigen Verfahrensschritt dar. Nach einer vorteilhaften Ausgestaltung des Verfahrens wird eine Abnahme des Volumens einer trockenen Kaffeepulvermenge gegenüber dem Volumen derselben befeuchteten Kaffeepulvermenge während eines Brühvorgangs erfasst und während der nachfolgenden Brühungen berücksichtigt. Es erfolgt also eine erste Messung am trockenen und eine zweite Messung am feuchten Kaffeepulver. Dazu kann es ebenso verdichtet bzw. verpresst werden wie bei bekannten Zubereitungsvorgängen, um für eine anschließende Messung geeignete und vergleichbare Verhältnisse zu schaffen. Die Erfindung verfolgt also abweichend vom Stand der Technik erstmals das Prinzip, den tatsächlichen Mahlgrad einer gemahlenen Pulvermenge durch einen Vergleich ihrer Parameter vor und nach der Brühung zu erfassen. Sie bestimmt damit erstmals eine tatsächliche auslaugbare Oberfläche des Kaffeepulvers, die aus dem Mahlgrad resultiert. Diese Ermittlung des tatsächlichen Mahlgrads erlaubt eine deutlich genauere Reaktion auf Veränderungen des Mahlvorgangs.

Eine fortlaufende Anpassung einer Mahldauer um einen voreingestellten Wert, mit der bislang häufig der Alterung des Mahlwerks Rechnung getragen wurde, kann damit jedenfalls entfallen. Der demgegenüber höhere Aufwand für eine Erfassung des konkreten Mahlgrads rechtfertigt sich allein schon dadurch, dass bereits die jeweils verwendete Kaffeesorte in Abhängigkeit beispielsweise von ihrer Bohnenart und ihrem Röstgrad das Mahlverhalten beeinflussen kann. Ein Wechsel der Kaffeesorte kann damit ohne Erfassung des tatsächlichen Mahlgrads zu einem unverhältnismäßig starken Abweichen vom gewünschten Getränkeergebnis führen.

Die erfindungsgemäße Ermittlung des Mahlgrades anhand eines Volumenvergleichs, nämlich des Volumens des verpressten trockenen Pulvervolumens und des verpressten feuchten Pulvervolumens, erfolgt durch einen Vergleich mit werkseitig ermittelten und gespeicherten Datensätzen. Sie geben einen Zusammenhang zwischen dem Mahlgrad und einer Abnahme zwischen einem trockenen und demselben befeuchteten Pulvervolumen an. Die Ermittlung setzt außerdem eine konstante Verpresskraft für die Verdichtungsvorgänge voraus. Anderenfalls wäre ein Vergleich mit den gespeicherten Daten bzw. vorangegangenen Messwerten nicht sinnvoll. Zudem sind die werkseitig eingestellten Volumina der Pulvermengen je Getränkeart bekannt, so dass aus der ermittelten Volumendifferenz und dafür hinterlegten Vergleichswerten für unterschiedliche Volumina der unterschiedlichen Getränkearten auf den aktuellen Mahlgrad geschlossen werden kann. Da nun der Mahlgrad über die Lebensdauer des Kaffeevollautomaten weitgehend gleichgehalten werden, bei einer einsetzenden Alterung des Mahlwerks also beispielsweise über die Verlängerung der Mahlzeit ausgeglichen werden kann, liegen die Abweichungen in der Pulvermenge sowohl hinsichtlich einer Überals auch einer Unterdosierung in einem beherrschbaren engen Rahmen. Beschädigungen der Maschine können damit ausgeschlossen werden.

Nach einer weiteren vorteilhaften Ausgestaltung des erfinderischen Verfahrens wird bei einem ersten Brühvorgang eine auslaugbare Kaffeepulveroberfläche nicht nur aus der Volumenabnahme der Pulvermasse, sondern zusätzlich aus einer konkreten Pulvermenge bzw. dem konkreten Pulvervolumen ermittelt und bei einem nachfolgenden zweiten Brühvorgang die Pulvermenge und/oder der Mahlgrad angepasst. Eine höhere Genauigkeit kann erfindungsgemäß nämlich dadurch erzielt werden, dass auch das konkrete Pulvervolumen erfasst wird, das für einen Brühvorgang hergestellt wird. Die Erfassung des konkreten Pulvervolumens lässt sich anhand der Position des Brühkolbens innerhalb der Brühkammer bei verpresstem Kaffeepulver feststellen, weil die Abmessungen, insbesondere beispielsweise der Durchmesser der Brühkammer, bekannt und konstant sind. Die Erfindung kommt nämlich zu der Erkenntnis, dass für ein erwünschtes Zubereitungsergebnis nicht - wie bislang im Stand der Technik - die Pulvermenge alleine und auch nicht der Mahlgrad isoliert zu betrachten sind. Sie lehrt vielmehr, dass sowohl der Mahlgrad als auch das Volumen des gemahlenen Kaffeepulvers von Bedeutung sind. Denn letztlich entscheidet nicht nur die Korngröße des Kaffeemehls bzw. die auslaugbare Oberfläche des Kaffeepulvers über das Brühergebnis. Vielmehr ist es von Bedeutung, aus welchem Volumen an gemahlenem Kaffeepulver sich dessen auslaugbare Oberfläche ergibt. Denn sie kann sich aus einem hohen Pulvervolumen mit einem geringen Mahlgrad genauso ergeben wie aus einem geringen Pulvervolumen mit einem hohen Mahlgrad. Ein ggf. für beide Fälle ermittelter gleicher Wert führt jedoch zu deutlichen geschmacklichen Unterschieden. Daher ist die Erfassung sowohl des Mahlgrads als auch der Kaffeepulvermenge erforderlich.

Zumindest nach der Brühung des gemahlenen Kaffeepulvers lässt es sich deutlich weiter verpressen als in trockenem Zustand. Grundsätzlich kann die Volumenmessung des feuchten Kaffeepulvers aber vor oder nach seinem Auslaugen erfolgen. So kann das Kaffeepulver auch schon vor der Brühung mit Wasser beaufschlagt und verpresst werden. Nach einer weiteren vorteilhaften Ausgestaltung des Verfahrens wird das Pulvervolumen nach der Brühung ermittelt. Denn ein Vorbenetzen und Verpressen des Kaffeepulvers vor seinem Auslaugen kann unerwünschte geschmackliche Auswirkungen auf das Kaffeepulver haben. Ein Verpressen nach der Brühung dagegen hat zudem den Vorteil einer geringeren Restfeuchte im Trester und lässt sich einfacher in den Brühvorgang integrieren.

Nach einer weiteren vorteilhaften Ausgestaltung des Verfahrens gliedert es sich in die folgenden vier Schritte:
a) Verpressen und Messen des frisch gemahlenen Pulvervolumens Pₜ in trockenem Zustand, also vor der Brühung,
b) Verpressen und Messen des Pulvervolumens P_{f} in feuchtem Zustand, also nach der Brühung,
c) Bilden einer Differenz ΔP aus den Werten für das trockene Pulvervolumen Pₜ und für das feuchte Pulvervolumen P_{f}: ΔP = Pₜ - P_{f}
d) Ermitteln des Mahlgrads und der ursprünglich dosierten Pulvermenge aus der Differenz ΔP und dem verpressten Pulvervolumen Pₜ oder P_{f}.

Demnach wird das Kaffeepulver in einer zunächst unbekannten Menge mit einem zunächst unbekannten Mahlgrad in die Brühkammer abgegeben. Im ersten Schritt a) verpresst die Brühgruppe das Kaffeepulver in trockenem Zustand. Sie verfügt über eine Einrichtung zur Erfassung des Kolbenwegs, um daraus das Volumen des verpressten Kaffeepulvers zu errechnen. Bei einer Spindelbrühgruppe kann der Kolbenweg wegen seines linearen Zusammenhangs aus der Anzahl der Motordrehungen der Antriebseinheit abgeleitet werden oder aus der Betriebszeit des Motors. Bei einer Kniehebelbrühgruppe kann die Position des T-Kolbens in der Brühkammer erfasst werden. Beim Erreichen einer definierten Verpresskraft wird der Verpressvorgang beendet. Bei einer Spindelbrühgruppe kann die Bestimmung der Verpresskraft über den Motorstrom oder über einen definierten Schaltpunkt erfolgen, bei einer Kniehebelbrühgruppe durch die Auslegung der T-Kolbenfedern. Aus der Position des Brühkolbens und aus den bekannten Abmessungen der Brühkammer kann jetzt das Pulvervolumen des gemahlenen Kaffeepulvers erfasst werden. Damit ist der Schritt a) abgeschlossen. Er liefert als Ergebnis das Volumen des frischen verpressten Kaffeepulvers in trockenem Zustand bei einer definierten Verpresskraft.

Anschließend wird ein Cremaventil, das für einen ausreichenden Brühdruck in der Brühkammer sorgt, geschlossen und die Brühung kann durchgeführt werden. Das heiße Zubereitungswasser laugt das Kaffeepulver aus. Durch das Auslaugen des Kaffeepulvers reduziert sich das Volumen des Kaffeepulvers in Abhängigkeit seines Mahlgrades bzw. seiner Korngröße. Denn grobes Kaffeepulver bietet weniger Benetzungs- bzw. Angriffsfläche als feines Pulver. Feines Kaffeepulver verliert daher mehr an Volumen als grobes Pulver. Nach Abschluss der Brühung und Abgabe des Kaffeegetränks wird das Cremaventil wieder geöffnet, um eventuell noch verbleibenden Restdruck in der Brühkammer abzubauen.

Jetzt wird im Schritt b) der verbleibende ausgelaugte Kaffeetrester noch einmal verpresst. Dazu kann es erforderlich sein, die Brühkammer kurz zu öffnen und wieder zu schließen. Die Verpressung erfolgt wieder bis zu einer definierten Verpresskraft unter gleichzeitiger Erfassung der Position des Brühkolbens. Daraus lässt sich der Wert für das Pulvervolumen im verpressten feuchten Zustand ermitteln. Außerdem wird der Tresterkuchen entwässert, so dass weniger Restfeuchte im Gerät verbleibt.

Die beiden Messungen der Schritte a) und b) liefern also zwei konkrete Messwerte für die Pulvervolumina Pₜ bzw. P_{f} im trockenen bzw. im befeuchteten Zustand, aus denen in Schritt c) ein Differenzwert ΔP gebildet werden kann, nämlich der für die Volumenabnahme des gepressten Kaffeepulvers bei einer definierten Verpresskraft.

Aus der Volumenabnahme ΔP wird im Schritt d) Rückschluss gezogen auf den Mahlgrad. Aus dem Mahlgrad und dem verpressten Pulvervolumen im feuchten oder im trockenen Zustand kann Rückschluss auf die ursprünglich dosierte Pulvermenge gezogen werden. Dafür sind in der Speichereinheit des Kaffeevollautomaten entsprechende Vergleichswerte hinterlegt. Bei einem späteren Brühvorgang können jetzt eventuelle Fehlmengen in der Pulverdosierung berücksichtigt werden, z. B. indem die Laufzeit des Mahlwerks verändert wird. Ergeben die Ermittlungen im Schritt c) und d) eine Abnahme des Mahlgrads über mehrere Brühungen hinweg hin zu einer Vergröberung des Kaffeepulvers, so kann das Mahlwerk entweder automatisch oder durch den Benutzer nachgestellt werden.

Das vorgestellte Verfahren erlaubt einen wesentlich genaueren Rückschluss auf die dosierte Pulvermenge als es bisher beispielsweise durch die Auswertung des Motorstroms für das Mahlwerk möglich war. Außerdem lässt sich die Gefahr einer überfüllten oder unterfüllten Brüheinheit deutlich reduzieren. Alterungen des Mahlwerks, die sich bislang durch einen groben Mahlgrad und infolgedessen durch einen dünneren und geschmacklich bitteren Kaffee bemerkbar machten, weil eine geringere benetzbare bzw. auslagubare Oberfläche vorlag, können nun sehr genau kompensiert werden. Dadurch erzielt der Kaffeevollautomat auch über seine Lebensdauer hinweg gleich bleibend gute Brühergebnisse.

Um eine gute Vergleichbarkeit zwischen den Messwerten für das verpresste trockene und das verpresste feuchte Pulvervolumen, aber auch zwischen den Ergebnissen unterschiedlicher Brühvorgänge zu erhalten, ist eine konstante und gleich bleibende Verpresskraft wichtig. Nach einer weiteren vorteilhaften Ausgestaltung der Erfindung wird das gemahlene Kaffeepulver mit einer Kraft von ca. 50 N verpresst. Dieser Wert ist in aller Regel ein guter Kompromiss zwischen einer ausreichenden Verpressung einerseits und dem konstruktiven Aufwand zum Aufbringen der Verpresskraft andererseits.

Der zugehörige Mahlgrad kann nach jedem Mahlvorgang bzw. zu jedem Mahlvorgang erfasst und der nachfolgende Brühvorgang bei einer Abweichung verändert werden. Dadurch kann eine hohe Genauigkeit erreicht werden. Nach einer weiteren vorteilhaften Ausgestaltung des Verfahrens kann der Mahlgrad auch in größeren, ggf. einstellbaren bzw. verstellbaren Intervallen erfasst werden, beispielsweise nach jedem fünften oder zehnten Brühvorgang und ggf. für jede Getränkeart wie Brühkaffee, Espresso etc. separat. Alternativ kann bei einer kontinuierlichen Erfassung der Werte des Pulvervolumens Pₜ bzw. P_{f} eine Mittelwertbildung dieser Werte über mehrere Brühvorgänge hinweg erfolgen und der Mahlgrad aufgrund der Mittelwerte ermittelt werden. Schließlich kann alternativ dazu bei einer kontinuierlichen Erfassung der Werte Pₜ und P_{f} eine Anpassung eines nachfolgenden Brühvorgangs erst bei einem wiederholten Erfassen einer signifikanten Abweichung von vorangegangenen Werten oder bei einer signifikanten Abweichung des Mahlgrads vorgenommen werden, weil eine ermittelte Abweichung auf einer vereinzelten Unregelmäßigkeit beruhen könnte. Eine signifikante Abweichung kann sich aus dem Überschreiten eines Grenzwertes gegenüber einem Bezugswert ergeben oder auch als "n"-te wiederholte Feststellung der Abweichung, wobei "n" beispielsweise 5 oder 10 sein kann. Alle diese Verfahrensvarianten dienen dazu, zufällige oder geringfügige Abweichungen zu eliminieren und den Berechnungsaufwand bei der Ermittlung des Mahlgrads zu verringern.

Das Prinzip der Erfindung wird nachfolgend anhand einer Zeichnung beispielshalber noch näher erläutert. In der Zeichnung zeigen:
- Figur 1:: einen schematischen Ablaufplan des erfinderischen Verfahrens, und
- Figur 2:: einen Graphen zur Ermittlung des Mahlgrads und der Pulvermasse,

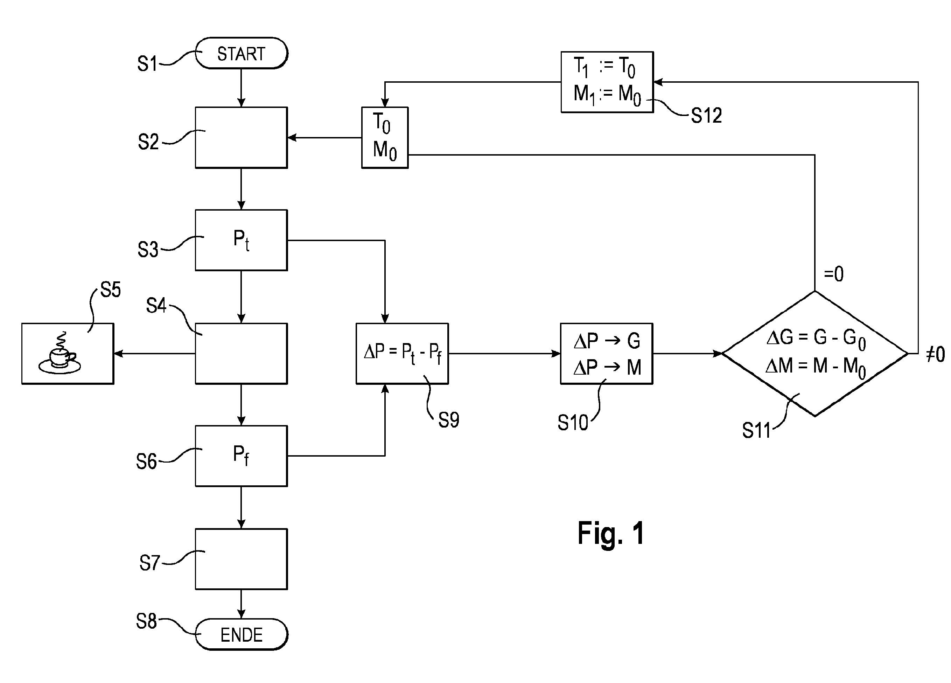

Der Ablauf des erfinderischen Verfahrens ist in Figur 1 schematisch dargestellt. In einem ersten Verfahrensschritt, bezeichnet mit "Start", wird ein Kaffeevollautomat eingeschaltet, ein Getränk gewählt und der Brühvorgang in Gang gesetzt. Daraufhin mahlt der Kaffeevollautomat im Schritt S2 eine dosierte Bohnenmenge zu einer bestimmten, aber noch unbekannten Pulvermasse G. Der Mahlvorgang beruht auf abgespeicherten Werten für eine Mahlzeit bzw. Mahldauer T₀ mit einem Mahlgrad M₀. Die Werte für die Mahldauer T₀ und den Mahlgrad M₀ stammen aus einem vorangegangenen Zubereitungsvorgang. Beim ersten Mahlvorgang des Kaffeevollautomaten sind werkseitig so eingestellt, dass sich eine Pulvermasse G für eine Getränkeportion ergibt, die für ein zufrieden stellendes Brühergebnis erforderlich ist.

Im Schritt S3 wird nun die gemahlene Pulvermasse G bereits im trockenen Zustand mit einer definierten Verpresskraft Fₜ verpresst. Anschließend wird das Volumen Pₜ der gepressten Pulvermasse G gemessen. Der Messwert Pₜ wird in einem Speicher des Kaffeevollautomaten abgelegt.

Anschließend wird in Schritt S4 die Pulvermasse G mit Heißwasser für eine Getränkeportion gebrüht. Daraufhin wird in Schritt S5 das gewählte Getränk am Getränkeauslauf abgegeben. Die Brühung verursacht ein Auslaugen des Kaffeepulvers und bedeutet zugleich einen Masseverlust des Kaffeepulvers. Er ist umso größer, je feiner das Kaffeepulver gemahlen ist, je höher also der Mahlgrad ist. Denn je feiner das Kaffeepulver gemahlen ist, umso mehr Oberfläche steht zur Verfügung, an der das heiße Wasser bei der Brühung angreifen und das Pulver auslaugen kann. Der Mahlgrad bestimmt also eine auslaugbare Kaffeeoberfläche. Für das geschmackliche Ergebnis ist es jedoch von Bedeutung, ob die auslaugbare Kaffeeoberfläche aus einer geringeren, aber fein gemahlenen Kaffeepulvermasse herrührt oder aus einer weniger fein gemahlenen großen Kaffeepulvermasse. Daher ist für eine gleich bleibende Getränkequalität nicht nur die Ermittlung der auslaugbaren Kaffeepulveroberfläche erforderlich, sondern auch die Ermittlung der zugrunde liegende Kaffeepulvermasse.

Nach Abschluss der Brühung im Schritt S4 und der Ausgabe des Getränks im Schritt S5 wird das Cremaventil geöffnet, um den Druck in der Brühkammer abzubauen. Der jetzt entstandene Trester aus ausgelaugtem Kaffeepulver wird in Schritt S6 erneut und ebenfalls mit einer definierten Verpresskraft F_{f} verpresst und das Volumen P_{f} des Kaffeetresters im feuchten und eluierten Zustand gemessen. Auch der so ermittelte Wert für das Pulvervolumen P_{f} im feuchten Zustand wird in einem Speicher des Kaffeevollautomaten abgelegt.

Das erneute Verpressen des Kaffeepulvers im feuchten Zustand reduziert den Wassergehalt des Tresters, so dass in Schritt S7 ein relativ trockener Trester in eine Auffangschale ausgeworfen werden kann. Damit ist der Brühvorgang an sich abgeschlossen.

Parallel dazu berechnet eine Recheneinheit des Kaffeevollautomaten in Schritt S9 aus den beiden gespeicherten Werten Pₜ und P_{f} einen Differenzwert ΔP aus dem Pulvervolumen im trockenen bzw. feuchten Zustand: ΔP = Pₜ - P_{f}.

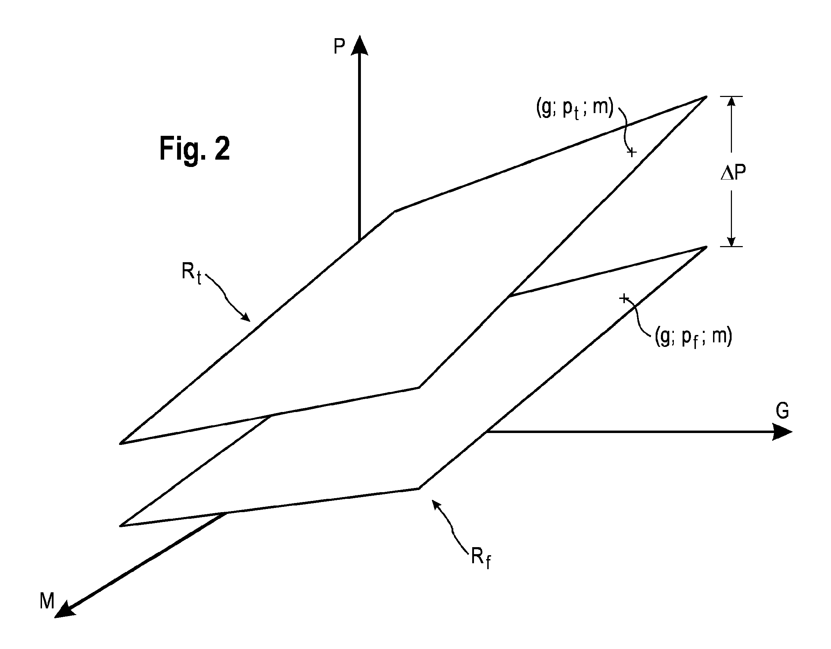

Aus dem Differenzwert ΔP und aus einem der beiden Absolutwerte für das Pulvervolumen im trockenen oder im feuchten Zustand ermittelt die Recheneinheit in Schritt S10 die ursprünglich gemahlene Pulvermasse G und den tatsächlichen Mahlgrad M. Die Ermittlung erfolgt durch einen Wertevergleich mit Werten, die in dem Speicher des Kaffeevollautomaten werkseitig hinterlegt sind. Die Werte dafür stammen aus werkseitigen Messungen von Referenzbrühvorgängen, deren Daten in der Speichereinheit des Kaffeevollautomaten abgelegt sind. Diese Ermittlung wird anhand des Graphen der Figur 2 noch näher erläutert.

Die im Schritt S10 ermittelten Werte für die tatsächliche Kaffeepulvermasse G und den Mahlgrad M des gerade abgeschlossenen Brühvorgangs werden in Schritt S11 mit den Werten für eine Kaffeepulvermasse G₀ und für den Mahlgrad M₀ der vorangegangenen Brühung verglichen. Stimmen sie miteinander überein, bleiben die Ausgangswerte für die Mahldauer T₀ und für den Mahlgrad M₀, die bei einem nachfolgenden Brühvorgang in Schritt 2 herangezogen werden, unverändert.

Stimmen sie jedoch nicht überein, werden in Schritt S12 entweder die Mahldauer T₀ oder der Mahlgrad M₀ oder ggf. beide angepasst, um im nachfolgenden Brühvorgang den geänderten Verhältnissen entsprechend das gewünschte Getränkeergebnis zu erzielen.

Die gemessenen Werte der Volumina Pₜ und P_{f} der verpressten Kaffeepulvermenge G werden mit entsprechenden Werten vorangegangener und nachfolgender Brühvorgänge zumindest indirekt verglichen. Für eine sinnvolle und vergleichbare Messung ist daher eine jeweils konstante und definierte Verpresskraft Fₜ bzw. F_{f} erforderlich. Fₜ und F_{f} brauchen nicht gleich groß zu sein, sollten aber über die Betriebszeit des Kaffeevollautomaten hinweg konstant bleiben. Bei der Konstruktion des Kaffeevollautomaten ist daher besonderes Augenmerk auf eine reproduzierbare und jeweils konstante Verpresskraft Fₜ bzw. F_{f} zu richten.

Die Ermittlung des Mahlgrads M und der tatsächlichen Pulvermasse G in Schritt S 10 erfolgt anhand einer Zuordnung der gemessenen Werte zu hinterlegten Datentripeln (g;p;m). Jedes Datentripel besteht aus jeweils einem Wert für ein verpresstes Volumen p, für eine trockene Pulvermasse g und für einen Mahlgrad m. Sie teilen sich auf in zwei Gruppen von Datentripeln, nämlich diejenigen für die Messung des verpressten trockenen Kaffeepulvers vor der Brühung und für die Messung des verpressten feuchten Kaffeepulvers nach der Brühung. Daraus ergeben sich zwei Datenräume Rₜ bzw. R_{f}, die in Figur 2 exemplarisch als Flächen dargestellt sind. Sie liegen in einem definierten Abstand zueinander in einem Koordinatensystem mit drei Achsen, nämlich einer x-Achse für die trockene Pulvermasse G, mit einer y-Achse für das verpresste Volumen P und einer z-Achse für den Mahlgrad M.

Der Erfindung ist die Erkenntnis zu verdanken, dass die beiden Datenräume für die Datentripel des Kaffeepulvers vor der Brühung und desjenigen nach der Brühung an so gut wie keiner Stelle denselben Abstand aufweisen. Diese Erkenntnis macht sich das Verfahren zu Nutze, indem es aus der Messung der Differenz ΔP der Volumina Pₜ bzw. P_{f} des Kaffeepulvers vor bzw. nach der Brühung eine Zuordnung dieses Werts zur trockenen Pulvermasse G und insbesondere zum Mahlgrad M herstellt. Zur Absicherung und Gewährleistung einer hohen Genauigkeit wird außerdem der Wert für das verpresste Volumen P, der zur Differenzbildung ohnehin ermittelt werden muss, mit erfasst und ausgewertet. So ist sichergestellt, dass das Verfahren auch dann zuverlässige Ergebnisse liefert, falls die gemessenen Werte eine gewisse Unschärfe aufweisen sollten.

Aus dem Graphen der Figur 2 wird auch ersichtlich, dass das Verpressen des Kaffeepulvers vor der Brühung bzw. nach der Brühung jeweils mit einer bekannten und jeweils derselben Kraft erfolgen muss. Dabei ist es nicht erforderlich, dass das Verpressen des Kaffeepulvers vor der Brühung mit derselben Kraft erfolgt wie die Verpressung nach der Brühung. Entscheidend ist dagegen, dass die jeweilige Verpresskraft vor bzw. nach der Brühung während der Lebensdauer des Kaffeevollautomaten mit derselben Kraft erfolgt sowie mit derselben Kraft wie bei der werkseitigen Ermittlung der Datentripel, die in dem Kaffeevollautomaten hinterlegt werden.

Da es sich bei den vorhergehenden, detailliert beschriebenen Verfahren und dem entsprechenden Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Wertevergleiche in Schritt S10 in anderer Form als in der hier beschriebenen folgen, beispielsweise indem eine breitere Datenbasis aus mehreren Werten vorangegangener Brühungen gebildet wird. Weiterhin schließt die Verwendung der unbestimmten Artikel "ein" bzw. "eine" nicht aus, dass die betreffenden Merkmale auch mehrfach vorhanden sein können.

### Bezugszeichenliste

- S1: Start eines Brühvorgangs
- S2: Mahlen
- S3: Verpressen und Messen
- S4: Infusion
- S5: Getränkeabgabe
- S6: Verpressen und Messen
- S7: Tresterauswurf
- S8: Ende des Brühvorgangs
- S9: Differenzbildung
- S10: Ermittlung Pulvermasse und Mahlgrad
- S11: Wertevergleich
- S12: Anpassung der Ausgangswerte

- M: Mahlgrad
- P: verpresstes Volumen
- G: Pulvermasse
- F: Verpresskraft

## Patentansprüche

1. Verfahren zum Betreiben eines Kaffeevollautomaten zur Sicherstellung einer gleich bleibenden Brühqualität während seiner Lebensdauer durch Ermitteln eines Mahlgrads unter Erfassung von physikalischen Kennwerten bezüglich des Kaffeepulvers, indem ein Kennwert einer Kaffeepulvermenge erfasst und daraus ein Parameter zur Bestimmung des Mahlgrads eines nachfolgenden Brühvorgangs ermittelt wird, **dadurch gekennzeichnet, dass** der Kennwert vor und nach einer Infusion von Zubereitungswasser erfasst wird.

2. Verfahren nach Anspruch 1, **dadurch gekennzeichnet, dass** ein Volumen als physikalischer Kennwert der Kaffeepulvermenge erfasst wird.

3. Verfahren nach Anspruch 2, **dadurch gekennzeichnet, dass** eine Differenz ΔP der Volumina der trockenen Kaffeepulvermenge Pₜ und derselben feuchten Kaffeepulvermenge P_{f} erfasst wird.

4. Verfahren nach Anspruch 3, **dadurch gekennzeichnet, dass** das Pulvervolumen P_{f} der feuchten Kaffeepulvermenge nach der Brühung ermittelt wird.

5. Verfahren nach einem der obigen Ansprüche mit den folgenden Schritten:
a) Verpressen und Messen des Pulvervolumens Pₜ in trockenem Zustand,
b) Verpressen und Messen des Pulvervolumens P_{f} in feuchtem Zustand,
c) Bilden einer Differenz ΔP aus den Werten für das trockene Pulvervolumen Pₜ und für das feuchte Pulvervolumen P_{f},
d) Ermitteln des Mahlgrads und der ursprünglich dosierten Pulvermenge aus der Differenz ΔP und dem verpressten Pulvervolumen Pₜ oder P_{f}.

6. Verfahren nach Anspruch 5, **dadurch gekennzeichnet, dass** das Pulvervolumen Pₜ und/oder P_{f} mit ca. 40 bis 60N verpresst wird.

7. Verfahren nach einem der obigen Ansprüche, **dadurch gekennzeichnet, dass** der Mahlgrad in fest eingestellten oder einstellbaren bzw. verstellbaren Intervallen erfasst wird.

8. Verfahren nach einem der obigen Ansprüche 2 bis 6, **gekennzeichnet durch** eine kontinuierliche Erfassung der Werte des Pulvervolumens Pₜ bzw. P_{f}, **durch** eine Mittelwertbildung der Werte über mehrere Brühvorgänge hinweg und eine Ermittlung des Mahlgrads aufgrund der Mittelwerte.

9. Verfahren nach einem der obigen Ansprüche 2 bis 6, **gekennzeichnet durch** eine kontinuierliche Erfassung der Werte des Pulvervolumens Pₜ bzw. P_{f} und **durch** einen Vergleich der Werte mit vorangegangenen Werten zur Ermittlung einer Abweichung.

## Claims

1. Method of operating a coffee machine to ensure consistent brewing quality during its service life by determining a coarseness setting by acquiring physical characteristic values relating to the coffee grounds, by a characteristic value of a quantity of coffee grounds being acquired and a parameter being determined therefrom to define the coarseness setting of a subsequent brewing process, **characterised in that** the characteristic value is acquired before and after an infusion of preparation water.

2. Method according to claim 1, **characterised in that** a volume is acquired as a physical characteristic value of the quantity of coffee grounds.

3. Method according to claim 2, **characterised in that** a difference ΔP in the volumes of the quantity of dry coffee grounds *Pₜ* and the same quantity of wet coffee grounds *P_{f}* is acquired.

4. Method according to claim 3, **characterised in that** the powder volume *P_{f}* of the quantity of wet coffee grounds is determined after brewing.

5. Method according to one of the above claims, with the following steps:
a) pressing and measuring the powder volume *Pₜ* in the dry state,
b) pressing and measuring the powder volume*P_{f}* in the wet state,
c) forming a difference ΔP from the values for the dry powder volume *Pₜ* and for the wet powder volume *P_{f},*
d) determining the coarseness setting and the originally metered powder quantity from the difference ΔP and the pressed powder volume *Pₜ* or *P_{f}.*

6. Method according to claim 5, **characterised in that** the powder volume *Pₜ* and/or *P_{f}* is pressed with approx. 40 to 60 N.

7. Method according to one of the above claims, **characterised in that** the coarseness setting is acquired at fixed or adjustable or variable intervals.

8. Method according to one of the above claims 2 to 6, **characterised by** a continual acquisition of the values of the powder volume *Pₜ* or *P_{f}* by averaging the values during a number of brewing processes and a determination of the coarseness setting on the basis of the average values.

9. Method according to one of the above claims 2 to 6, **characterized by** a continual acquisition of the values of the powder volume *Pₜ* or *P_{f}* and by comparing the values with preceding values in order to determine a deviation.

## Revendications

1. Procédé de fonctionnement d'une machine à café entièrement automatique pour assurer une qualité de percolation constante pendant sa durée de vie par détermination d'un degré de mouture en enregistrant des valeurs caractéristiques physiques relatives à la poudre de café, du fait qu'une valeur caractéristique d'une quantité de poudre de café est détectée et qu'à partir de cette quantité un paramètre de détermination du degré de mouture d'une opération de percolation suivante est déterminé, **caractérisé en ce que** la valeur caractéristique est détectée avant et après une infusion d'eau de préparation.

2. Procédé selon la revendication 1, **caractérisé en ce qu'**un volume est détecté comme valeur caractéristique physique de la quantité de poudre de café.

3. Procédé selon la revendication 2, **caractérisé en ce qu'**une différence ΔP des volumes de la quantité de poudre de café sèche Pₜ et de la même quantité de poudre de café humide P_{f} est détectée.

4. Procédé selon la revendication 3, **caractérisé en ce que** le volume de poudre P_{f} de la quantité de poudre de café humide est déterminé après la percolation.

5. Procédé selon l'une quelconque des revendications précédentes, comprenant les étapes suivantes :
a) pressage et mesure du volume de poudre Pₜ à l'état sec,
b) pressage et mesure du volume de poudre P_{f} à l'état humide,
c) formation d'une différence ΔP à partir des valeurs pour le volume de poudre Pₜ sec et pour le volume de poudre P_{f} humide,
d) détection du degré de mouture et de la quantité de poudre initialement dosée à partir de la différence ΔP et du volume de poudre pressé Pₜ ou P_{f}.

6. Procédé selon la revendication 5, **caractérisé en ce que** le volume de poudre Pₜ et/ou P_{f} est pressé avec env. 40 à 60 N.

7. Procédé selon l'une quelconque des revendications précédentes, **caractérisé en ce que** le degré de mouture est détecté à intervalles réglés de manière fixe ou à intervalles réglables resp. modifiables.

8. Procédé selon l'une quelconque des revendications précédentes 2 à 6, **caractérisé par** une détection continue des valeurs du volume de poudre Pₜ resp. P_{f} par formation d'une moyenne des valeurs sur plusieurs opérations de percolation et par une détection du degré de mouture en raison des valeurs moyennes.

9. Procédé selon l'une quelconque des revendications précédentes 2 à 6, **caractérisé par** une détection continue des valeurs du volume de poudre Pₜ resp. P_{f} et par une comparaison des valeurs avec des valeurs précédentes pour déterminer une variation.
